# EUROPEAN PATENT SPECIFICATION

(11) **EP 1 289 778 B1**
(45) Date of publication and mention of the grant of the patent: **29.12.2004**
(21) Application number: 01943741.7
(22) Date of filing: 24.05.2001
(51) Int. Cl.: B44C 5/04, D21H 27/28

(54) **LAMINATE OVERLAY WITH PRESS PLATE PROTECTION AND METHODS OF PRODUCING THE SAME**
LAMINATDECKBLATT MIT SCHUTZPRESSPLATTE-EIGENSCHAFTEN UND VERFAHREN ZU DESSEN HERSTELLUNG
REVETEMENT POUR STRATIFIE POURVU D'UNE PROTECTION DE PLAQUE DE PRESSE ET PROCEDES DE PRODUCTION DUDIT REVETEMENT

(30) Priority: 02.06.2000 US 586003
(43) Date of publication of application: 12.03.2003
(73) Proprietor: Akzo Nobel N.V., 6824 BM Arnhem (NL)
(72) Inventor: LIU, Ann, X., Pickering, Ontario L1V 6W1 (CA); GUIVERNAU-MARQUES, Ramon, Markham, Ontario L3R 1Z1 (CA)
(74) Representative: Von Renesse, Dorothea, Dr.
(86) International application number: PCT/IB2001/001194
(87) International publication number: WO 2001/092037

(56) References cited:
- EP-A- 0 329 154
- EP-A- 0 732 449
- WO-A-00/44576
- FR-A- 2 139 990
- GB-A- 1 197 726

## Description

This invention relates to abrasion-resistant resin-impregnated overlays for laminates that reduce press plate damage and methods of producing the same.

### Background of the Invention

Decorative laminates for floorcovering , wall panels, countertops, furniture and the like, are generally of two types: low pressure laminates and high pressure laminates. Low pressure laminates are usually produced by hot press lamination of synthetic resin film, typically in the form of resin impregnated paper, to a "backing" or "board" such as fiber board, especially medium density fiber board, particle board, composite panel, etc. This produces a hard, crosslinked thermoset material on the surface of the board or backing. High pressure laminates, on the other hand, are conventionally made by stacking and curing under heat and pressure a plurality of layers (at least two) of impregnated paper, fabric and/or other core material.

In both low pressure and high pressure laminates, a colored, printed, or otherwise embellished decorative layer of synthetic resin film (for example, impregnated paper), dry paper, etc. is placed on top of the other layers to provide the laminate with pleasing esthetic qualities.

To help protect decorative laminates from wear, it has long been the practice to cover the decorative layer with an overlay. An overlay is a resin impregnated substrate that upon exposure to heat and/or pressure during the lamination process becomes transparent or translucent and allows viewing of the decorative layer. Any substrate that is or becomes transparent or translucent upon lamination may be used to produce overlay. Typically, alpha cellulose is used.

It has become common to add particles (sometimes referred to as "grit") to overlays to increase the wear resistance, and particularly abrasion resistance. For example, US Patent No. 5,820,937 teaches adding to overlays mineral particles such as silica, alumina, alundun, corundum, emery, spinel, tungsten carbide, zirconium boride, titanium nitride, tantalum carbide, beryllium carbide, silicon carbide, aluminum boride, boron carbide and diamond dust.

Overlays containing hard particles such as those noted above, provide desired wear and abrasion resistance to the ultimately produced decorative laminate. However, these overlays present a persistent problem to laminate manufacturers; the abrasive particles damage the press plates (also sometimes referred to as caul plates) in the laminating equipment. Damaged press plates must be replaced, leading to increased maintenance costs and lost manufacturing time.

This is a known problem, and attempts have been made to reduce press plate damage caused by grit-containing overlays, while maintaining desired wear and abrasion resistance.

EP0732449 and the article "Liquid Overlay: High wear resistant surfaces," Graudenz, Eckhard and Titho, Gunter, 1996 Plastic Laminates Symposium, TAPPI Proceeding, pages 245-6, propose mixing together some typical overlay components (resin, alpha cellulose and corundum), then applying the mixture in liquid form to a decorative paper.

US 5,141,799 teaches that caul plate scratching can be reduced by using silica powder having a Mohs hardness of 3.0 to 6.0 as the abrasion-resistant material in an overlay.

However, despite these attempts, press plate damage to laminating equipment due to abrasion-resistant overlays is a continuing problem.

This invention provides an abrasion-resistant overlay that reduces press plate damage in laminating equipment while still delivering industry-standard abrasion resistance.

### Summary of the invention

The current invention relates to a method of treating a grit-containing overlay for laminates, the method comprising:
(a) impregnating a grit-containing overlay with a thermosetting resin composition comprising a thermosetting resin and fibers, and
(b) drying the impregnated overlay of (a).

Additionally, simultaneous with, and/or subsequent to drying, the impregnated overlay can be at least partially cured.

The invention also relates to a method of producing a resin-impregnated grit-containing overlay for laminates, said method comprising:
(a) impregnating grit-containing overlay with a first thermosetting resin composition comprising a first uncured thermosetting resin,
(b) drying, and optionally at least partially curing, the impregnated grit-containing overlay of (a),
(c) impregnating the overlay of (b) with a second uncured thermosetting resin composition comprising a second uncured thermosetting resin, and
(d) drying, and optionally at least partially curing the impregnated substrate of (c),
wherein at least one of first uncured thermosetting resin composition and second uncured thermosetting resin composition further comprises fiber.

Preferably, the fibers are cellulose fibers, more preferably, alpha cellulose fibers.

The invention further relates to grit-containing impregnated overlay produced by the method described above.

Further, the invention relates to laminates comprising such overlays.

### Detailed Description of the invention

The current invention, in one embodiment, is a method of impregnating a grit-containing overlay with a thermosetting resin composition comprising an uncured thermosetting resin and fiber, then drying the impregnated overlay. In another embodiment, after impregnation, the uncured thermosetting resin is at least partially cured, either during and/or subsequent to drying. The invention also comprises subsequent resin impregnation, including optional drying and/or curing after each impregnation treatment. If more than one impregnation is conducted on an overlay, fiber must be present in at least one thermosetting resin composition and may be present in all such compositions used. The invention also comprises the resulting impregnated overlay. It has been found that the use of fiber, as described herein, significantly and surprisingly reduces press plate damage while maintaining desired abrasion resistance.

The grit-containing overlay used in the current invention is any overlay material having particles hard enough to scratch, mar or otherwise damage laminating equipment press plates. This generally means an abrasion resistance of at least 900 cycles (NEMA LD 3.13 Wear Resistance Test). The basis weight of overlays useful in the current invention (prior to impregnation) is typically about 20 to about 90 grams, more typically about 30 to about 80 grams. Such overlays are commercially available, for non-limiting example, from Mead Specialty Paper Division, South Lee, Massachusetts, and Scholler & Hoesch N.A. Inc., Pisgah Forest, N.C.

In principle, any uncured thermosetting resin, or combination of thermosetting resins, can be used in a thermosetting resin composition to impregnate grit-containing overlays according to the instant invention. Currently, the resins most commonly used are melamine-formaldehyde, urea-formaldehyde, phenol-formaldehyde, acrylic resins and polyester resins. The resin is typically applied to the overlay in the form of an aqueous or solvent solution having a resin concentration of about 40 to about 60 wt. %, preferably about 45 to about 55 wt. %. The overlay can be impregnated with resin by various techniques of applying resin compositions, such as baths, rollers, doctor blades, air knife, wire wrapped rod, metering roll, doctor bars, etc. The resin compositions can be applied in one or more stages with drying and/or partial curing between application stages. As noted above, fiber may be present in one, some, or all resin compositions when multiple-stage impregnation is employed.

The fibers added to the thermosetting resin composition typically have an average length of about 10 to about 200 µm (microns), preferably about 20 to about 120 µm (microns), and an average thickness of about 10 to about 45 µm (microns). Such fibers having a length less than about 30 µm (microns) are sometimes referred to as "microfibers" and those having a length between about 30 and 200 are sometimes referred to as "short fibers". Microfibers, short fibers and mixtures thereof may be used in the current invention. Fibers used in the current invention are typically cellulose fibers, but may be of other materials. Non-limiting examples of commercially available fibers suitable for use herein are ARBOCEL B 600 and ARBOCEL BE 600-30, available from J. Rettenmaier USA LP, Schoolcraft, Michigan. Fibers should be present in the thermosetting resin composition in an amount to provide desired press plate protection while still meeting abrasion-resistance requirements (typically at least 3,000 IP cycles, more preferably at least 7,000 as measured by NEMA LD 3.13). To meet these technical requirements, fiber is typically present in the final thermosetting resin composition in an amount of at least 2 wt. %, and on the overlay in an amount of at least 6 g/m², preferably at least about 8 g/m², more preferably at least about 10 g/m², and most preferably at least about 12 g/m². Mixtures of types and/or sizes of fiber are also envisioned in the current invention.

The invention is further disclosed and described by the following non-limiting examples. All percentages, unless otherwise indicated, are weight percent.

### Preparation of Example 1 (Comparison)

A Vits impregnation machine was loaded with a 2.53m wide roll of alpha cellulose abrasive overlay (46 g/m² basis weight from Mead Specialty Paper Division, South Lee, Massachusetts) and run at 30 m/minute through a first bath (see Table 1). The thus treated grit-containing overlay was air dried. The overlay was then exposed to a second impregnation in a Vits impregnation machine at 30 m/minute through a second bath (see Table 1) and oven dried at 130-155 °C.

The impregnated overlay was subjected to the abrasion and press plate damage tests described below.

**Table 1**

| Resin Compositions | | |
|---|---|---|
| Composition | First Bath | Second Bath |
| Aqueous melamine formaldehyde resins (59% solids) | 85.94% | 93.28% |
| Hardener 528 (BASF) | 0.24% | 0.30% |
| Water | 13.75% | 6.043% |
| Hypersal XT793 (wetting agent from Hoechst) | 0.063% | 0.37% |
| Tego-fomext (from Tego Chemie, Hopewell, Virginia) (defoamer) | 0.007% | 0.007% |

### Preparation of Examples 2 through 5

Example 1 was repeated except the amount of fiber indicated in Table 2 was mixed into the thermosetting resin composition prior to impregnating the grit-containing overlay. In each Example 2 through 5, the fiber added was ARBOCEL BE 600-30 alpha cellulose from J. Rettenmaier & Sohn, Rosenberg, Germany. The amount of melamine formaldehyde resin was reduced by the amount of fiber added in each example. The fiber was present in both resin composition baths.

### Testing of Examples 1 through 5

### Wear Resistance (Abrasion)

Wear resistance (abrasion) for each of the samples was measured by the NEMA LD 3.13 Wear Resistance Test. The initial wear point (IP) is reported in Table 1 for each of the 5 examples.

### Press Plate Damage

Press plate damage caused by the various grit-containing overlays of Examples 1-5 was measured by the method described below.
1. Cut a low pressure laminate medium density fiberboard (MDF) having a standard melamine resins impregnated printed paper with Gloss finish (60 degree) to a size of 10 x 10 cm (4 x 4 inches).
2. Drill a center hole on the laminate board (ID = 7 mm).
3. Fasten the laminate board to the turntable of an Abrading Machine from Teledyne Taber Inc.
4. Apply double faced tape on the wire side of the overlay and cut it to strip of 12.7 mm (1/2 inch) wide and 153 mm (6 inches) long.
5. Using the overlay strips to make up the test wheels (NEMA wheels from Teledyne Taber Inc.), place them on the board on the turntable and turn on the machine.
6. Inspect the print board every 50 cycles until the initial wear point (IP) is reached. The IP is reached when a clearly recognizable part of the print is removed in all four quadrants of the specimen and the base paper is exposed. The reported IP is the average of two specimens rounded to the nearest 50 cycles.

Results of press plate damage tests for each example are reported in Table 2.

Wear resistance and press plate damage tests were conducted on the resulting impregnated paper by the methods described above. The results were as follows:

**Table 2**

| Abrasion and Press Plate Damage | | | | |
|---|---|---|---|---|
| Example | Fiber Content in Resin | Fiber on Overlay (g/m²) | Taber Abrasion IP (cycles) | Press Plate Damage IP (cycles) |
| 1 | No Fiber | 0 | 7,000 | 800-1000 |
| 2 | 4% Fiber | 9.2 | 7,500 | 2200 |
| 3 | 2% Fiber | 4.6 | 7,000 | 1500 |
| 4 | 3% Fiber | 6.9 | 7,000 | 1700 |
| 5 | 5% Fiber | 11.5 | 7,000 | >2500 |

As demonstrated by the results reported above, the impregnated grit-containing overlay of the present invention significantly reduces press plate damage while maintaining the desired level of wear (abrasion) resistance.

### Example 6 (Comparison)

Example 6 was preformed according to the teaching of EP 0732449. A décor sheet was impregnated using a Babcock coating machine with a melamine-formaldehyde resin solution according to the First Bath in Table 1, then dried at 70-98°C. The treated décor sheet was then impregnated with a melamine-formaldehyde solution according to the Second Bath in Table 1 that further contained both abrasive particles of aluminum oxide having a particle size of 50 µm (micron) in an amount of 50% by weight and fiber (ARBOCEL BE 600-20) of 12% based on the weight of resin. The treated décor sheet was oven dried at 110-160°C. The Babcock coating machine was run at 28 m/min for both baths.

The resulting impregnated paper was subjected to wear resistance and press plate damage tests described above. The results were as follows:
Taber Abrasion IP = 7,000 cycles
Press Plate Damage IP = 50 cycles

Clearly, the impregnated paper produced according to EP 0732449 provides inadequate press plate protection. The press plate protection provided by the overlay of the instant invention is surprisingly superior.

## Claims

1. A method of producing a resin-impregnated grit-containing overlay for laminates, said method comprising
(a) impregnating grit-containing overlay with a thermosetting resin composition comprising an uncured thermosetting resin and fiber, and
(b) drying the impregnated grit-containing overlay of (a).

2. The method of claim 1 further comprising at least partially curing the uncured thermosetting resin in the impregnated grit-containing overlay.

3. The method of claim 1 wherein said fiber is cellulose fiber.

4. The method of claim 3 wherein said cellulose fiber is alpha cellulose fiber.

5. The method of claim 1 wherein said fiber is a mixture of various fibers.

6. The method of claim 1 wherein said fiber is selected from the group consisting of microcellulose fiber, short cellulose fiber and mixtures thereof.

7. The method of claim 1 wherein said uncured thermosetting resin is selected from the group consisting of melamine-formaldehyde, urea-formaldehyde, phenol-formaldehyde and mixtures thereof.

8. The method of claim 1 wherein the fiber is present in amounts sufficient to provide said impregnated grit-containing overlay with a press plate damage resistance initial wear point of at least about 1200 cycles.

9. The method of claim 1 wherein said fiber is present as at least 2 wt. % of the thermosetting resin composition.

10. A resin impregnated grit-containing overlay for laminates produced by the method according to claim 1.

11. A laminate comprising a resin-impregnated grit-containing overlay of claim 10.

12. A method of producing a resin-impregnated grit-containing overlay for laminates, said method comprising:
(a) impregnating grit-containing overlay with a first thermosetting resin composition comprising a first uncured thermosetting resin,
(b) drying, and optionally at least partially curing, the impregnated grit-containing overlay of (a),
(c) impregnating the overlay of (b) with a second uncured thermosetting resin composition comprising a second uncured thermosetting resin, and
(d) drying, and optionally at least partially curing the impregnated substrate of (c),
wherein at least one of first uncured thermosetting resin composition and second uncured thermosetting resin composition further comprises fiber.

13. The method of claim 12 wherein both first thermosetting resin compositions and second thermosetting resin composition contain fiber.

14. The method of claim 12 wherein said fiber is cellulose fiber.

15. The method of claim 14 wherein said cellulose fiber is alpha cellulose fiber.

16. The method of claim 12 wherein said fiber is a mixture of various fibers.

17. The method of claim 12 wherein said fiber is selected from the group consisting of microcellulose fiber, short cellulose fiber and mixtures thereof.

18. The method of claim 12 wherein said uncured first uncured thermosetting resin and said second uncured thermosetting resin are independently selected from the group consisting of melamine-formaldehyde, urea-formaldehyde, phenol- formaldehyde and mixtures thereof.

19. The method of claim 12 wherein the fiber is present in amount sufficient to provide said impregnated grit-containing overlay with a press plate damage resistance of at least 1200 cycles.

20. The method of claim 12 wherein said fiber is present as at least 2 wt. % of at least one of the first uncured thermosetting resin compositions and the second uncured thermosetting resin composition.

21. A resin-impregnated grit-containing overlay for laminates produced by the method according to claim 12.

22. A laminate comprising a resin-impregnated grit-containing overlay of claim 21.

## Patentansprüche

1. Verfahren zur Herstellung eines Harz imprägnierten, Partikel enthaltenden Überzugs für Laminate, wobei dieses Verfahren umfasst:
(a) Imprägnieren des Partikel enthaltenden Überzugs mit einer Duroplastenharz-Zusammensetzung, die ein nicht ausgehärtetes, Duroplastenharz und Fasern enthält, und
(b) Trocknen des imprägnierten, Partikel enthaltenden Überzugs aus (a).

2. Verfahren nach Anspruch 1, **dadurch gekennzeichnet, daß** das Duroplastenharz in dem imprägnierten, Partikel enthaltenden Überzug wenigstens teilweise gehärtet ist.

3. Verfahren nach Anspruch 1, **dadurch gekennzeichnet, daß** die Fasern Cellulosefasern sind.

4. Verfahren nach Anspruch 3, **dadurch gekennzeichnet, daß** die Cellulosefasern alpha-Cellulosefasern sind.

5. Verfahren nach Anspruch 1, **dadurch gekennzeichnet, daß** die Fasern ein Gemisch verschiedener Fasern sind.

6. Verfahren nach Anspruch 1, **dadurch gekennzeichnet, daß** die Fasern ausgewählt sind aus der Gruppe bestehend aus Mikrocellulosefasern, kurzer Cellulosefasern und Gemischen davon.

7. Verfahren nach Anspruch 1, **dadurch gekennzeichnet, daß** das nicht ausgehärtete Duroplastenharz ausgewählt ist aus der Gruppe bestehend aus Melamin-Formaldehyd, Harnstoff-Formaldehyd, Phenol-Formaldehyd und Gemischen davon.

8. Verfahren nach Anspruch 1, bei dem die Fasern in ausreichender Menge vorhanden sind, um dem imprägnierten Partikel enthaltenden Überzug eine Festigkeit gegen eine Pressplatten-Beschädigung in Höhe eine anfänglichen Reibepunkts von etwa 1200 Zyklen zu verleihen.

9. Verfahren nach Anspruch 1, **dadurch gekennzeichnet, daß** die Fasern zu wenigstens 2 Gewichts-% in der Duroplastenharz-Zusammensetzung vorliegen.

10. Harz imprägnierter, Partikel enthaltender Überzug für Laminate, hergestellt durch das Verfahren nach Anspruch 1.

11. Laminat, umfassend den Harz imprägnierten, Partikel enthaltenden Überzug nach Anspruch 10.

12. Verfahren zur Herstellung eines Harz imprägnierten, Partikel enthaltenden Überzug für Laminate, wobei dieses Verfahren umfasst:
(a) Imprägnieren des Partikel enthaltenden Überzugs mit einer ersten Duroplastenharz-Zusammensetzung, enthaltend ein erstes, nicht ausgehärtetes Duroplastenharz,
(b) Trocknen und gegebenenfalls wenigstens teilweises Aushärten des imprägnierten, Partikel enthaltenden Überzugs aus (a),
(c) Imprägnieren des Überzugs aus (b) mit einer zweiten, nicht ausgehärteten Duroplastenharz-Zusammensetzung, enthaltend ein zweites, nicht ausgehärtetes Duroplastenharz und
(d) Trocknen und gegebenenfalls wenigstens teilweises Aushärten des imprägnierten Substrats aus (c),
wobei wenigstens eine der ersten und zweiten, nicht ausgehärteten Duroplastenharz-Zusammensetzungen außerdem Fasern enthält.

13. Verfahren nach Anspruch 12, **dadurch gekennzeichnet, daß** sowohl die erste als auch die zweite Duroplastenharz-Zusammensetzung Fasern enthält.

14. Verfahren nach Anspruch 12, **dadurch gekennzeichnet, daß** die Fasern Cellulosefasern sind.

15. Verfahren nach Anspruch 14, **dadurch gekennzeichnet, daß** die Cellulosefasern alpha-Cellulosefasern sind.

16. Verfahren nach Anspruch 12, **dadurch gekennzeichnet, daß** die Fasern ein Gemisch verschiedener Fasern sind.

17. Verfahren nach Anspruch 12, **dadurch gekennzeichnet, daß** die Fasern ausgewählt sind aus der Gruppe bestehend aus Mikrocellulosefasern, kurzer Cellulosefasern und Gemischen davon.

18. Verfahren nach Anspruch 12, **dadurch gekennzeichnet, daß** das das erste, nicht ausgehärtete Duroplastenharz und das zweite, nicht ausgehärtete Duroplastenharz jeweils ausgewählt sind aus der Gruppe bestehend aus Melamin-Formaldehyd, Harnstoff-Formaldehyd, Phenol-Formaldehyd und Gemischen davon.

19. Verfahren nach Anspruch 12, **dadurch gekennzeichnet, daß** die Fasern in ausreichender Menge vorhanden sind, um dem imprägnierten, Partikel enthaltenden Überzug mit einer Festigkeit gegen Pressplatten-Beschädigung von wenigstens 1200 Zyklen zu verleihen.

20. Verfahren nach Anspruch 12, **dadurch gekennzeichnet, daß** die Fasern zu wenigstens 2 Gewichts-% in wenigstens einer der nicht ausgehärteten ersten oder zweiten Duroplastenharz-Zusammensetzungen vorliegen.

21. Harz imprägnierter, Partikel enthaltender Überzug für Laminate hergestellt durch das Verfahren nach Anspruch 12.

22. Laminat umfassend den Harz imprägnierten, Partikel enthaltenden Überzug aus Anspruch 21.

## Revendications

1. Procédé de fabrication d'un revêtement contenant des particules imprégné de résine pour des stratifiés, ledit procédé comprenant
(a) l'imprégnation d'un revêtement contenant des particules par une composition de résine thermodurcissable comprenant une résine thermodurcissable non polymérisée et une fibre, et
(b) le séchage du revêtement contenant des particules imprégné de (a).

2. Procédé selon la revendication 1, comprenant en outre au moins la polymérisation partielle de la résine thermodurcissable non polymérisée dans le revêtement contenant des particules imprégné.

3. Procédé selon la revendication 1, dans lequel ladite fibre est une fibre de cellulose.

4. Procédé selon la revendication 3, dans lequel ladite fibre de cellulose est une fibre de cellulose alpha.

5. Procédé selon la revendication 1, dans lequel ladite fibre est un mélange de diverses fibres.

6. Procédé selon la revendication 1, dans lequel ladite fibre est sélectionnée parmi le groupe constitué de fibre de microcellulose, de fibre de cellulose courte et de mélanges de celles-ci.

7. Procédé selon la revendication 1, dans lequel ladite résine thermodurcissable non polymérisée est sélectionnée parmi le groupe constitué de mélamine-formaldéhyde, d'urée-formaldéhyde, de phénol-formaldéhyde et de mélanges de ceux-ci.

8. Procédé selon la revendication 1, dans lequel les fibres sont présentes en quantités suffisantes pour fournir audit revêtement contenant des particules imprégné un point d'usure initial de résistance à l'endommagement par une plaque de pression d'au moins 1 200 cycles.

9. Procédé selon la revendication 1, dans lequel ladite fibre est présente sous forme d'au moins 2 % en poids de la composition de résine thermodurcissable.

10. Revêtement contenant des particules imprégné de résine destiné à des stratifiés, fabriqué par le procédé conforme à la revendication 1.

11. Stratifié comprenant un revêtement contenant des particules imprégné de résine selon la revendication 10.

12. Procédé de fabrication d'un revêtement contenant des particules imprégné de résine destiné à des stratifiés, ledit procédé comprenant les étapes consistant à :
(a) imprégner le revêtement contenant des particules d'une première composition de résine thermodurcissable comprenant une première résine thermodurcissable non polymérisée,
(b) faire sécher, et optionnellement au moins polymériser partiellement, le revêtement contenant des particules imprégné de (a),
(c) imprégner le revêtement de (b) avec une seconde composition de résine thermodurcissable non polymérisée comprenant une seconde résine thermodurcissable non polymérisée, et
(d) faire sécher, et optionnellement polymériser au moins partiellement, le substrat imprégné de (c),
où au moins l'une de la première composition de résine thermodurcissable non polymérisée et de la seconde composition de résine thermodurcissable non polymérisée comprend en outre une fibre.

13. Procédé selon la revendication 12, dans lequel à la fois la première composition de résine thermodurcissable et la seconde composition de résine thermodurcissable contiennent des fibres.

14. Procédé selon la revendication 12, dans lequel ladite fibre est une fibre de cellulose.

15. Procédé selon la revendication 14, dans lequel ladite fibre de cellulose est une fibre de cellulose alpha.

16. Procédé selon la revendication 12, dans lequel ladite fibre est un mélange de diverses fibres.

17. Procédé selon la revendication 12, dans lequel ladite fibre est sélectionnée parmi le groupe constitué de fibre de microcellulose, de fibre de cellulose courte et de mélanges de celles-ci.

18. Procédé selon la revendication 12, dans lequel ladite première résine thermodurcissable non polymérisée et ladite seconde résine thermodurcissable non polymérisée sont sélectionnées indépendamment parmi le groupe constitué de mélamine-formaldéhyde, d'urée-formaldéhyde, de phénol-formaldéhyde et de mélanges de ceux-ci.

19. Procédé selon la revendication 12, dans lequel les fibres sont présentes en quantités suffisantes pour fournir audit revêtement contenant des particules imprégné une résistance à l'endommagement par une plaque de pression d'au moins 1 200 cycles.

20. Procédé selon la revendication 12, dans lequel ladite fibre est présente sous forme d'au moins 2 % en poids d'au moins l'une de la première composition de résine thermodurcissable non polymérisée et de la seconde composition de résine thermodurcissable non polymérisée.

21. Revêtement contenant des particules imprégné de résine destiné à des stratifiés, fabriqué par le procédé conforme à la revendication 12.

22. Stratifié comprenant un revêtement contenant des particules imprégné de résine selon la revendication 21.
